# EUROPEAN PATENT APPLICATION

(11) **EP 4 101 745 A1**
(43) Date of publication of application: **14.12.2022**
(21) Application number: 22382480.6
(22) Date of filing: 18.05.2022
(51) Int. Cl.: B62J 1/08

(54) **TELESCOPIC SEATPOST HYDRAULIC MECHANISM FOR BICYCLE SADDLE**

(30) Priority: 07.06.2021 ES 202131177 U
(71) Applicant: Bagés Estopà, Ricard, 08140 Caldes de Montbui Barcelona (ES)
(72) Inventor: Bagés Estopà, Ricard, 08140 Caldes de Montbui Barcelona (ES)
(74) Representative: Espiell Gomez, Ignacio

(57) **Abstract**

Telescopic seatpost hydraulic mechanism for bicycle saddle that comprises a hydraulic system having a chamber with two tanks (3a, 3b) of liquid fluid, a divider piston (4), and a valve (5) that allows or prevents the passage of the fluid between both tanks (3a, 3b), where the chamber (3a, 3b) of the liquid fluid, that comprises a first tank (3a) and a second tank (3b) separated to each other by a divider piston (4), has a capacity that does not vary and the total volume of the fluid between both tanks (3a, 3b), that are located at one and the other sides of the piston (4), is always kept constant; the divider piston (4) is formed by two rods (4a, 4b) that extend respectively to one side and the other of a dividing head (4c), which separates both tanks (3a, 3b) of fluid to each other, one and the other tanks (3a, 3b) being located around each of the said rods (4a, 4b) and in that both rods (4a, 4b) occupy a constant volume in their center; and the valve (5), opens a canal that allows the passage of fluid between both tanks (3a, 3b) without varying the total length of the fluid chamber.

## Description

### SPECIFICATION

### OBJECT OF THE INVENTION

The invention, as stated in the title of this specification, refers to a telescopic seatpost hydraulic mechanism for a bicycle saddle that contributes, to the function to which it is designed, with advantages and characteristics that are disclosed in detail thereafter, that mean an improvement to the current state-of-art.

The object of this invention falls on a telescopic seatpost mechanism to regulate the height of the saddle with the own weight of the user by means of an elastic element associated to an hydraulic system the blocking of which allows to fix the seatpost in a given position, in which, contrary to the currently known, the piston that moves the fluid is a double-rod piston that divides the chamber into two tanks, above and under the said piston, but keeps its height constant, eliminating the existence of a reserve chamber having a variable volume which means, at least, two significant advantages, on the one hand, to avoid including a floating piston necessary to compensate the variation of volume the said chamber provokes, making that the seatpost blocking is more reliable and, on the other hand, to reduce the amount of fluid required and, therefore, the mass of the assembly ends up being smaller.

### FIELD OF APPLICATION OF THE INVENTION

The field of application of this invention is within the sector of the industry engaged in manufacturing bicycle accessories, namely focusing in the field of the telescopic seatposts to regulate the height of the saddle.

### BACKGROUND OF THE INVENTION

In the market, telescopic seatpost mechanisms are known to regulate the height of the bicycle saddle from an actuator, for example located on the handlebar or on the frame, and by means of the own thrust or not of the user on the saddle, for which it comprises an elastic element that can consist of a spring or compressed air within a watertight compartment associated to an hydraulic system so that it determines the relative movement between a lower tube fixed on the frame and another top mobile with the saddle coupled on it.

In most of the case, a piston integral with one of the two parts of the seatpost is used, either the one mounted integral with the frame of the bicycle or the one that is integral with the seat.

The movement of the piston forces a displacement of the fluid of the hydraulic system through a controlled passage, normally a valve. In blocking position, this piston exerts a pressure on a fluid chamber, normally oil, that is closed. On the other side of the valve, there is the oil reserve that does not receive the pressure exerted by the weight of the cyclist. Often, it is pressurized by the elastic element, either as a spring or an airtight compartment.

The problem is that the said fluid reserve chamber, possesses a variable volume depending on the position of the seatpost. At the maximum extension its volume is minimum and as the seatpost is being compressed, the oil of the pressurized chamber is displaced to the reserve chamber.

Given to the fact that the volume of the reserve chamber is variable, an IFP floating piston (*Internal Floating Piston*) is used that separates the reserve oil chamber from the described elastic means (compressed air or spring).

The said floating piston moves only due to the differences of pressure between the oil and the elastic means, because it compensates the length variation of the fluid chamber when the fluid moves from the reserve chamber to the pressure chamber.

When this fails, either for watertightness or sliding reasons, air enters in the recess of the oil and when it enters in the pressurized chamber (blocking), the blocking of the position passes from being rigid to be elastic, as if it were a suspension.

The objective of this invention is, therefore, the development of an improved type of telescopic seatpost mechanism, the hydraulic system of which eliminates the need to include the described floating piston providing it with the same higher reliability.

On the other hand, and as reference to the current state-of-the-art, although as it was said, other telescopic seatpost mechanism are known having a hydraulic system, at least the applicant is not aware of the existence of any that presents technical and structural characteristics same or similar to those the herein claimed possesses.

### EXPLANATION OF THE INVENTION

The telescopic seatpost hydraulic mechanism for bicycle saddle that the invention proposes is configured as the suitable solution to the above-mentioned objective, the characterizing details making it possible and that distinguish it are conveniently appearing in the final claims attached to this specification.

Concretely, what the invention proposes , as it was said before, is a telescopic seatpost mechanism of the type allowing to regulate the height of the saddle with the own weight of the user by means of an elastic element associated to a hydraulic system the blocking of which fixes the seatpost in a given position, which is essentially distinguished by the fact that the piston of the said hydraulic system is a double-rod piston that divides the fluid chamber into two tanks, located one above and another under around the rods of the said piston, so that the opening of the valve and the passage of the fluid between one and the other does not modify its height, eliminating the existence of a reserve chamber having a variable volume which means, advantageously, on the one hand, to avoid the inclusion of a floating piston necessary to compensate the variation of volume the said chamber provokes making that blocking the seatpost is more reliable and, on the other hand, it reduces the amount of fluid required and therefore the mass of the assembly ends up being smaller.

For this and more concretely, the telescopic seatpost mechanism of the invention comprises, essentially:
- a first element fixed on the bicycle frame or fixed lower tube,
- a second element fixed on the bicycle saddle or mobile top tube, that presents a lengthwise movement with respect to the first element or fixed tube to raise or lower the saddle,
- a liquid fluid chamber, normally oil, that comprises a first tank and a second tank separated from each other by a piston and so that the total volume of fluid in both tanks at one and the other sides of the piston is maintained constant,

- a double-rod divider piston that separates both tanks to each other, one and the other tanks being located around each of the said rods which occupy a constant volume at the center thereof, and
- a valve allowing or preventing the movement of the fluid between both tanks.

So that, the variation of the fluid between a tank and the other determines the thrust or not of an elastic element, for example a spring or compressed air in a watertight compartment, to tend to provoke the mobile tube sliding with respect to the fixed tube and, consequently, raising the saddle when no pressure is exerted on it.

With this, given that the chamber is located fully around an element having a constant volume, that means, the piston rods, as well in a first top tank as in a second lower tank, even though the passage of the fluid occurs from a tank to another, the total height or total volume of the chamber is still always constant, because there does not exist a fluid reserve chamber that provokes a variation of its volume and, therefore, the existence of a floating piston is avoided.

The movement of the fluid between tanks is carried out thanks to the pressure the user exerts when he leans on the saddle that pushes the mobile tube and the elastic element incorporated between it and the fixed tube, therefore, pushing the saddle to its low position or by means of the pressure that the said elastic element exerts, for example a spring and/or compressed air on a watertight compartment that tends to expand and pushes the mobile tube and therefore the saddle to its high position when no pressure is exerted on the saddle by the user.

When opening the valve, that means, when locating it in a position coincident with holes of the dividing head of the divider piston, the fluid runs through the canal that is open in it from the first tank to the second without varying the total length of the fluid chamber and therefore without the need of using a floating piston.

Preferably, the valve is operated from the lower end of the fixed tube, through some actuator handled by the user.

Preferably, the fluid chamber is formed by a tubular part integral with the mobile tube so that it moves with it surrounding the divider piston by its respective rods.

Preferably, in the said head of the divider piston the existence of stops is provided, that limit the travel of the said tubular part that defines the fluid chamber between its maximum and its minimum position.

Preferably, as well in the head of the divider piston as at both ends of the body, defining the fluid chamber, the existence of sealing gaskets is provided.

### DESCRIPTION OF THE DRAWINGS

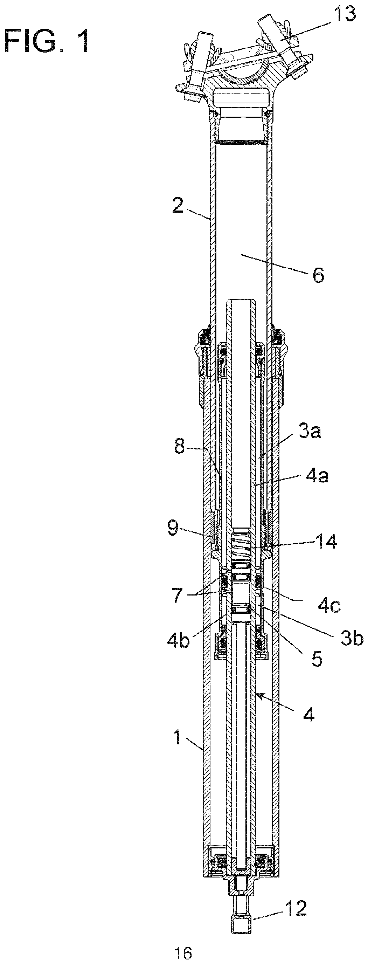

To complement the description being carried out and in order to assist to best understand the characteristics of the invention, attached to this specification, as an integral part thereof, there is a set of drawings in which, for illustration and no limitation purpose, the following has been represented:
The figure number 1.- It shows a longitudinal section view of an example of embodiment of the telescopic seatpost hydraulic mechanism for a bicycle saddle object of the invention, the parts and elements it comprises are seen, as well as their configuration and arrangement, namely of the hydraulic fluid chamber and the divider piston; and
the figure number 2.- It shows a sectional view of an enlarged portion of the mechanism, according to the invention, shown in the figure 1, concretely of the area of the divider piston and the opening and closing valve that communicates the respective tanks of the fluid chamber.

### PREFERRED EMBODIMENT OF THE INVENTION

Seen the said figures, and according to the numerals adopted, a nonlimiting example of embodiment of the telescopic seatpost hydraulic mechanism for the bicycle saddle of the invention can be seen, which comprises what is described in detail below.

Thus, as it can be seen in the said figures, the telescopic seatpost hydraulic mechanism for the bicycle saddle of the invention is of the type that, in a known manner comprises:
- a first element fixed on the frame or fixed lower tube (1) of the bicycle,
- a second element fixed on the saddle of the bicycle or mobile top tube (2), that possesses a lengthwise movement with respect of the first element or fixed tube (1), to raise or lower the saddle of which only the securing coupling (13) has been represented, and
- a hydraulic system with
   - a chamber having two tanks (3a, 3b) of liquid fluid,
   - a divider piston (4), and
   - a valve (5) that allows or prevents the movement of passage of the fluid between both tanks (3a, 3b), so that, the variation of fluid between the first tank (3a) and the second tank (3b) determines the thrust or not of an elastic element (6), for example compressed air in a watertight compartment, that, in turn, when the user is not pressing the saddle, tends to provoke the mobile tube (2) sliding upwards to raise the saddle with respect to the fixed tube (1).

From this already known configuration, the mechanism of the telescopic seatpost of the invention is essentially distinguished:
- in that the chamber (3a, 3b) of the liquid fluid, normally oil, that comprises a first tank (3a) and a second tank (3b) separated to each other by a divider piston (4), has a capacity that does not vary and the total fluid volume between both tanks (3a, 3b), that are located at one and the other sides of the piston (4), is always kept constant; and
- in that the divider piston (4) is formed by two rods (4a, 4b) that extend respectively to one side and the other of a dividing head (4c), which separates both tanks (3a, 3b) of fluid to each other, one and the other tanks (3a, 3b) being located around each of the said rods (4a, 4b) which occupy a constant volume at their center; and
- in that the valve (5), in open position, opens a canal that allows the passage of fluid between both tanks (3a, 3b) without varying the total length of the fluid chamber.

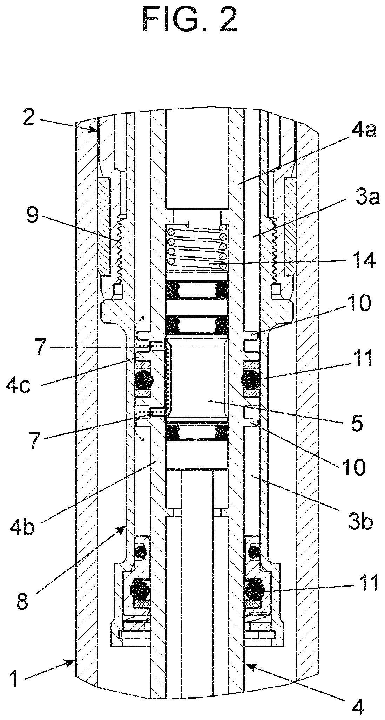

Preferably, the valve (5) is located at the center of the divider piston (4) and presents a longitudinal travel movement within it, to be located or not in a position coincident with some holes (7) of the dividing head (4c) of the divider piston (4), which open a canal (represented by means of a dashed line arrow in the figure 2) that allows the passage of the fluithrough the first tank (3a) to the second tank (3b) or vice versa without varying the total length of the fluid chamber.

Preferably, the movement of the valve (5) to be positioned in open position, that means, coinciding with the holes (7) of passage of the fluid of the piston (4) is operated from the lower end of the fixed tube (1), by which this later is fixed on the frame of the bicycle and to which this piston (4) is joined, through an actuator (12) with which it is joined and that can be linked to some element that the user handles.

Preferably, the valve (5) is associated to a spring (14) that overcomes its operation from the actuator (12) and tends to bring it back to the closed position, that means, not coincident with the holes (7) of passage of the piston (4).

Preferably, the chamber (3a, 3b) of fluid is formed by a tubular part (8) integral with the mobile tube (2) so that it travels with it and that is surrounded by the divider piston (4) being adjusted by their ends to the respective rods (4a, 4b) of the said divider piston (4).

Preferably, the tubular part (8) that defines the fluid chamber (3a, 3b) is joined to the mobile tube (2) through a threaded coupling (9) provided at the lower end of the said mobile tube (2).

Preferably, in the dividing head (4c) of the divider piston (4) the existence of stops (10) is provided, located on the top and under the holes (7) of passage, that limit the travel of the said tubular part (8) that defines the fluid chamber between its maximum and minimum position.

Preferably, as well in the dividing head (4c) of the divider piston (4) as in both ends of the tubular part (8) that defines the fluid chamber (3a, 3b) the existence of sealing gaskets (11) is provided.

Sufficiently disclosed the nature of this invention, as well as the manner of implementing it, it is not deemed necessary to extend anymore its explanation in order that any person skilled in the art understands its extends and the advantages arising from it.

## Claims

1. Telescopic seatpost hydraulic mechanism for bicycle saddle that comprises:
- a first element fixed on the bicycle frame or fixed lower tube (1),
- a second element fixed on the bicycle saddle or mobile top tube (2), that presents a lengthwise movement with respect to the first element or fixed tube (1) to raise or lower the saddle, of which only the securing coupling (13) has been represented, and
- a hydraulic system with
- a chamber having two tanks (3a, 3b) of liquid fluid,
- a divider piston (4), and
- a valve (5) that allows or prevents the movement of passage of the fluid between both tanks (3a, 3b),
so that, the variation of fluid between the first tank (3a) and the second tank (3b) determines the thrust or not of an elastic element (6), that, in turn, when the user is not pressing the saddle, tends to provoke the mobile tube (2) sliding upwards to raise the saddle with respect to the fixed tube (1), is **characterized:**
- **in that** the chamber (3a, 3b) of the liquid fluid, that comprises a first tank (3a) and a second tank (3b) separated to each other by a divider piston (4), has a capacity that does not vary and the total fluid volume between both tanks (3a, 3b), that are located at one and the other sides of the piston (4), is always kept constant;
- **in that** the divider piston (4) is formed by two rods (4a, 4b) that extend respectively to one side and the other of a dividing head (4c), which separates both tanks (3a, 3b) of fluid to each other, one and the other tanks (3a, 3b) being located around each of the said rods (4a, 4b) and in that both rods (4a, 4b) occupy a constant volume at their center; and
- **in that** the valve (5), opens a canal that allows the passage of fluid between both tanks (3a, 3b) without varying the total length of the fluid chamber.

2. - Telescopic seatpost hydraulic mechanism for bicycle saddle according to the claim 1, **characterized in that** the valve (5) is located at the center of the divider piston (4) and presents a longitudinal travel movement within it, to be located or not in a position coincident with some holes (7) of the dividing head (4c) of the divider piston (4), so that it opens a canal that allows the passage of the fluid through the first tank (3a) to the second tank (3b) or vice versa without varying the total length of the fluid chamber.

3. Telescopic seatpost hydraulic mechanism for bicycle saddle according to the claim 2, **characterized in that** the valve (5) is joined to an actuator (12) provided at the lower end of the fixed tube (1), to which is also joined the piston (4) to achieve its movement and position it in open position, that means, coinciding with the holes (7) of passage of fluid of the piston (4).

4. Telescopic seatpost hydraulic mechanism for bicycle saddle according to the claims 2 and 3, **characterized in that** the valve (5) is associated to a spring (14) that tends to bring it back to the closed position, that means, not coincident with the holes (7) of the passage of the piston (4).

5. Telescopic seatpost hydraulic mechanism for bicycle saddle according to any of the claims 1 to 4, **characterized in that** the fluid chamber (3a, 3b) is formed by a tubular part (8) integral with the mobile tube (2), so that it moves with it and that it surrounds the divider piston (4) fitted by its ends to the respective rods (4a, 4b) of the said divider piston (4).

6. Telescopic seatpost hydraulic mechanism for bicycle saddle according to the claim 5, **characterized in that** the tubular part (8) that defines the fluid chamber (3a, 3b) is joined to the mobile tube (2) through a threaded coupling (9) provided at the lower end of the said mobile tube (2).

7. Telescopic seatpost hydraulic mechanism for bicycle saddle according to the claims 5 and 6, **characterized in that** in the said dividing head (4c) of the divider piston (4) the existence of stops (10) is provided, located above and under the holes (7) of passage, that limit the travel of the said tubular part (8) that defines the fluid chamber between its maximum and its minimum position.

8. Telescopic seatpost hydraulic mechanism for bicycle saddle according to any of the preceding claims, **characterized in that** the dividing head (4c) of the divider piston (4) as in both ends of the tubular part (8) that defines the fluid chamber (3a, 3b) the existence of sealing gaskets (11) is provided.
